# FASCICULE DE BREVET EUROPEEN

(11) **EP 0 564 357 B1**
(45) Date de publication et mention de la délivrance du brevet: **07.01.1998**
(21) Numéro de dépôt: 93400838.4
(22) Date de dépôt: 31.03.1993
(51) Int. Cl.: F24J 2/50, F24J 2/04

(54) **Dispositif pour capter l'énergie solaire et la transférer sur un milieu récepteur à chauffer**
Vorrichtung zum Auffangen von Sonnenenergie und zur Übertragung auf einen zu heizenden Empfänger
Device for collecting solar energy and transferring it to a receiver to be heated

(30) Priorité: 01.04.1992 FR 9203962
(43) Date de publication de la demande: 06.10.1993
(73) Titulaire: MASA-THERM S.A., 2034 Peseux (CH)
(72) Inventeur: Rylewski, Eugeniusz Michal, 78470 Saint Remy les Chevreuse (FR)
(74) Mandataire: Plaçais, Jean-Yves

(56) Documents cités:
- WO-A-80/02712
- WO-A-87/00607
- DE-A- 2 646 262
- FR-A- 2 353 026
- FR-A- 2 653 528
- US-A- 4 088 117
- US-A- 4 220 137
- US-A- 4 370 974
- DEUTSCHE BAUZEITSCHRIFT - DBZ no. 2, Février 1988, GÜTERSLOH DE pages 205 - 208 KÖSTER 'SOLARTECHNIK'

## Description

L'invention concerne un dispositif pour capter l'énergie solaire et la transférer sur un milieu récepteur à chauffer.

On a cherché depuis longtemps à capter l'énergie solaire pour chauffer un milieu récepteur tel que, par exemple, un mur extérieur d'un bâtiment ou un volume d'air à l'intérieur d'un bâtiment.

Cette récupération d'énergie est intéressante notamment pour apporter, en période froide, un complément d'énergie thermique à des milieux récepteurs faisant partie de bâtiments ou d'autres structures, exposés à un rayonnement solaire, même faible.

On connaît pour cela différents moyens, comme par exemple des revêtements de couleur noire ou de couleur sombre que l'on applique sur des surfaces réceptrices exposées aux rayonnements solaires. Ces revêtements, qui fonctionnent suivant le principe du corps noir, ont pour avantage de procurer une réception et une récupération solaires élevées pendant tout le temps où ils sont exposés aux rayonnements solaires.

Mais, dès que ces rayonnements cessent, notamment après le coucher du soleil, ces revêtements connus restituent en grande partie, en raison de pertes thermiques, l'énergie thermique qu'ils ont captée et emmagasinée auparavant. De tels revêtements ont en effet un coefficient de perte qui est généralement de l'ordre de 6 à 8 W/°C/m².

Comme ces pertes sont proportionnelles à la différence entre la température atteinte par le revêtement et la température du milieu ambiant extérieur, la restitution thermique est d'autant plus élevée que cette différence est plus grande.

Par ailleurs, on connaît des dispositifs de récupération d'énergie solaire que l'on appelle aussi "isolations transparentes" et qui comportent des parois transparentes, en verre ou en matière plastique, qui s'étendent dans des directions parallèles ou perpendiculaires aux surfaces réceptrices à chauffer.

Ces isolations transparentes sont destinées à laisser passer le rayonnement solaire et à emmagasiner de l'énergie thermique.

Un exemple typique de ces dispositifs est celui des serres utilisées en horticulture.

Ces dispositifs du type à isolation transparente peuvent être combinés, le cas échéant, à des revêtements de couleur sombre comme indiqué plus haut. Ils ont eux aussi pour inconvénient de présenter des pertes thermiques élevées lorsqu'ils ne sont plus exposés aux rayonnements solaires.

Par ailleurs, les dispositifs connus mentionnés ci-dessus ont aussi pour inconvénient de capter en permanence l'énergie solaire et notamment en période chaude, c'est-à-dire à un moment où, pour certaines applications, la récupération de cette énergie n'est pas souhaitée et est même néfaste.

Il est alors nécessaire de prévoir des moyens pour rendre ces dispositifs inopérants lorsque l'utilisateur le souhaite.

On connaît aussi, d'après FR-A-2 353 026, un dispositif pour capter l'énergie solaire et la transférer sur un milieu récepteur à chauffer, comprenant une multiplicité d'éléments profilés sensiblement horizontaux, espacés les uns des autres et superposés pour former un rideau ayant une face externe propre à être exposée à un rayonnement solaire et une face interne propre à être disposée du côté du milieu récepteur, dans lequel les éléments profilés ont deux faces réfléchissantes et un profil de forme choisie de manière à définir entre eux une multiplicité de canaux d'air dirigés ascendants de la face externe à la face interne, et dans lequel des moyens de fermeture sont prévus pour immobiliser l'air contenu dans les canaux.

Toutefois, ce dispositif connu ne donne pas entière satisfaction du fait notamment qu'il ne constitue pas un bon isolant.

On connaît par ailleurs, d'après US-A-4 370 974, un dispositif pour capter l'énergie solaire qui comprend également une multiplicité d'éléments profilés sensiblement horizontaux espacés les uns des autres et superposés pour former un rideau, comme décrit dans le document FR-A-2 353 026.

De plus, les éléments profilés sont non-conducteurs de la chaleur de la face externe à la face interne et ont un profil constant choisi de telle façon que le rayonnement solaire parvienne indirectement au milieu récepteur par réflexions successives sur leurs faces réfléchissantes.

Toutefois, ce dispositif connu vise à concentrer le rayonnement solaire vers un absorbeur particulier, qui peut être soit un conduit parcouru par un fluide, soit une rangée de cellules photovoltaïques. Ce dispositif a donc des applications limitées.

C'est en conséquence un but de l'invention de procurer un dispositif pour capter l'énergie solaire sur un milieu récepteur à chauffer, qui surmonte les inconvénients mentionnés ci-dessus.

C'est en particulier un but de l'invention de procurer un tel dispositif qui permet de capter l'énergie solaire et qui possède un coefficient de perte thermique réduit.

C'est aussi un but de l'invention de procurer un tel dispositif qui possède une structure simple et donc peu coûteuse à réaliser.

C'est encore un but de l'invention de procurer un tel dispositif qui permet de capter d'une manière contrôlée l'énergie solaire, pour éviter une récupération thermique trop élevée lorsque le dispositif est soumis à un rayonnement solaire intense.

L'invention a aussi pour but de procurer un tel dispositif qui peut être utilisé sur des bâtiments et autres structures.

L'invention propose à cet effet un dispositif du type défini en introduction, comprenant une multiplicité d'éléments profilés sensiblement horizontaux, espacés les uns des autres et superposés pour former un rideau ayant une face externe propre à être exposée à un rayonnement solaire et une face interne propre à être disposée du côté du milieu récepteur, dans lequel les éléments profilés sont non-conducteurs de la chaleur de la face externe à la face interne, ont deux faces réfléchissantes et un profil de forme choisie de manière à définir entre eux une multiplicité de canaux d'air dirigés ascendants de la face externe à la face interne, des moyens de fermeture étant prévus du côté de la face interne et/ou de la face externe du rideau pour immobiliser l'air contenu dans les canaux, et dans lequel les éléments profilés sont espacés deux à deux d'un intervalle ayant sensiblement la même valeur du côté de la face externe et du côté de la face interne du rideau et ont un profil choisi de telle façon que le rayonnement solaire parvienne indirectement au milieu récepteur par réflexions successives sur leurs faces réfléchissantes, de manière que le milieu récepteur ne voit pas la face externe du rideau pour former un bouchon radiatif.

Les faces réfléchissantes des éléments profilés permettent ainsi de conduire l'énergie solaire vers la face interne du rideau située du côté du milieu récepteur. De plus, il se produit un réchauffement de l'air contenu dans les canaux définis entre les éléments profilés.

Par différence de densité, l'air chaud a tendance à monter et l'air froid a tendance à descendre. En raison de la configuration ascendante des canaux, l'air chaud a tendance à monter vers la face interne du rideau, qui est fermée, tandis que l'air froid a tendance à descendre vers la face externe du rideau. De cette manière, on crée un bouchon convectif de chaleur en partie supérieure des canaux, c'est-à-dire à proximité de la face interne du rideau qui est située adjacente au milieu récepteur à chauffer.

On crée ainsi une multiplicité de couches d'air chaud qui sont immobilisées et qui constituent en même temps un très bon isolant, avec un coefficient de pertes thermiques réduit.

On obtient ainsi un isolant efficace qui permet également à l'énergie solaire de le traverser grâce aux réflexions sur les faces réfléchissantes des éléments profilés. Cette énergie rencontre une surface réceptrice, c'est-à-dire la face interne fermée du rideau qui est de préférence de couleur foncée. Cette énergie se transforme en énergie thermique et ne peut plus s'échapper vers l'extérieur, étant donné que le rayonnement infrarouge est difficilement réfléchi. On obtient ainsi une valve thermique anti-retour.

Dans une première forme de réalisation de l'invention, chaque élément profilé est constitué d'un film mince de profil incurvé formé d'un matériau non-conducteur de la chaleur.

Dans une autre forme de réalisation de l'invention, chaque élément profilé est constitué de deux films minces de profil incurvé, formés en un matériau non-conducteur de la chaleur et réunis entre eux le long de deux bords d'extrémité pour définir entre les deux films un espace isolant rempli d'air.

Dans ce dernier cas, on améliore davantage les propriétés isolantes du dispositif puisque chaque élément profilé contient un certain volume d'air formant isolant.

Dans les deux formes de réalisation précédentes, le film mince est avantageusement formé d'un matériau choisi parmi le papier, le carton, les matières plastiques et autres matériaux analogues.

On peut utiliser en particulier des films en matière plastique tels que le polyéthylène ou le polyester. S'il s'agit d'une matière transparente, on peut prévoir un revêtement réfléchissant sur l'une des deux faces du film, bien qu'il soit préférable en général de prévoir un tel revêtement sur les deux faces. Il peut s'agir par exemple d'un revêtement formé par un dépôt d'aluminium, le revêtement étant avantageusement protégé par un vernis.

Dans une autre forme de réalisation de l'invention, chaque élément profilé est un élément massif ayant un profil s'apparentant à celui d'une aube de turbine. Cet élément massif peut être réalisé par exemple en matière plastique, en béton, en bois, etc.

Pour former au moins un bouchon radiatif, le dispositif peut comprendre soit des éléments profilés à profil incurvé, soit des éléments profilés à profil en gradins ou en escalier. Dans ce dernier cas, on obtient plusieurs bouchons radiatifs successifs.

Le profil des éléments profilés peut être choisi en fonction de la latitude géographique de l'endroit où doit être implanté le dispositif pour optimiser le parcours du rayonnement solaire à l'intérieur des canaux. De cette manière, on peut assurer un chauffage en période froide ou hivernale lorsque les rayons du soleil sont faiblement inclinés sur l'horizon et au contraire empêcher un tel chauffage lorsque les rayons du soleil sont fortement inclinés sur l'horizon.

Dans une autre forme de réalisation de l'invention, chaque élément profilé possède un profil variable et comprend une partie fixe qui s'étend de manière ascendante à partir d'une région intermédiaire du rideau vers la face interne de ce dernier et une partie pivotante réglable qui s'étend depuis la face externe du rideau vers la région intermédiaire, laquelle constitue un pivot entre la partie fixe et la partie mobile.

Ainsi, on peut régler les parties pivotantes respectives des éléments profilés pour permettre le chauffage de la surface réceptrice ou au contraire interdire ce chauffage, et cela au gré de l'utilisateur.

Selon encore une autre forme de réalisation de l'invention, le dispositif comprend en outre une multiplicité d'organes auxiliaires prolongeant respectivement les éléments profilés du côté de la face externe du rideau, chaque organe auxiliaire possédant une surface supérieure de couleur foncée et une surface inférieure réfléchissante.

Ces organes auxiliaires peuvent être fixes ou mobiles et sont orientés en fonction du site géographique d'implantation du dispositif.

Ainsi, en hiver, lorsque le rayonnement solaire est faiblement incliné sur l'horizon, on obtient des réflexions par les parois réfléchissantes des organes auxiliaires, ce qui conduit au chauffage du milieu récepteur.

En revanche, en été, lorsque les rayonnements solaires sont fortement inclinés par rapport à l'horizon, les rayonnements viennent frapper les surfaces supérieures foncées des organes auxiliaires. Ces derniers sont ainsi chauffés et la chaleur est dégagée par convection vers l'extérieur, sans assurer le chauffage du milieu récepteur.

Dans les formes de réalisation décrites précédemment, le dispositif comprend avantageusement un panneau de forme générale rectangulaire supportant une multiplicité d'éléments profilés.
On peut ainsi fabriquer des panneaux en usine et les installer ensuite sur le lieu d'implantation.

Dans les différentes formes de réalisation de l'invention décrites précédemment, la face externe du rideau peut être ouverte, ou bien revêtue d'une plaque transparente par exemple en verre ou en matière plastique. Une telle plaque permet de protéger le rideau, notamment dans les régions où il existe de forts vents dominants.

La face interne du rideau, qui est fermée, est avantageusement munie d'un revêtement de couleur sombre, de préférence noire, pour que l'énergie solaire rencontrant cette surface se transforme en énergie thermique.

Le dispositif selon les formes de réalisation précédentes convient tout particulièrement pour être appliqué à l'extérieur d'un bâtiment par exemple le long d'un mur vertical incliné. Il peut être aussi appliqué contre une paroi d'un réservoir ou d'une citerne d'eau pour assurer le chauffage de cette eau.

Dans une autre forme de réalisation de l'invention, le dispositif est destiné à former en lui-même un mur transparent ou non.

Dans ce cas, la face externe du rideau est munie d'une plaque transparente, tandis que la face interne est munie d'une plaque foncée ou transparente. Dans le cas où à la fois la face interne et la face externe sont munies d'une plaque transparente, on obtient un mur transparent qui peut être utilisé notamment pour la réalisation de serres, de murs vitrés pour des salles de sports, de spectacles, etc.

Dans une autre forme de réalisation de l'invention, le dispositif est réalisé sous la forme d'un store qui s'apparente à un store à lames du type store vénitien. Les éléments profilés peuvent être alors rapprochés ou écartés les uns des autres au moyen de cordons de tirage ou analogues. Ce store est avantageusement utilisé derrière une surface vitrée à l'intérieur d'un bâtiment.

Dans cette dernière forme de réalisation, les moyens de fermeture prévus du côté de la face interne du rideau sont avantageusement formés par un soufflet reliant les éléments profilés deux à deux.

Sur le même principe, on peut réaliser un volet, utilisable devant ou derrière une fenêtre d'un bâtiment, dans lequel les éléments profilés sont reliés rigidement entre eux.

Dans les différentes formes de réalisations de l'invention, les éléments profilés peuvent être superposés dans un plan sensiblement vertical ou dans un plan incliné, par exemple à 45° par rapport à la verticale, en fonction de la configuration du milieu récepteur à chauffer.

Dans la description qui suit, faite seulement à titre d'exemple, on se réfère aux dessins annexés, sur lesquels :
- la figure 1 est une vue partielle en coupe transversale d'un dispositif selon une première forme de réalisation de l'invention appliqué contre un milieu récepteur ;
- la figure 2 est une vue partielle en coupe transversale d'un dispositif selon une seconde forme de réalisation de l'invention appliqué contre un milieu récepteur ;
- la figure 3 est une vue en élévation d'un panneau supportant un dispositif conforme à celui de la figure 1 ;
- la figure 4 est une vue en coupe partielle à échelle agrandie suivant la ligne IV-IV de la figure 3 ;
- la figure 5 est une vue partielle en coupe transversale d'un dispositif selon une troisième forme de réalisation de l'invention appliqué contre un milieu récepteur ;
- la figure 6 est une vue partielle en coupe d'un dispositif selon une quatrième forme de réalisation de l'invention ;
- la figure 7 est une vue partielle en coupe transversale d'un dispositif selon une cinquième forme de réalisation de l'invention, qui s'apparente au dispositif de la figure 2, et qui est muni en outre d'organes auxiliaires extérieurs ;
- la figure 8 est une vue partielle en coupe transversale d'un dispositif selon une sixième forme de réalisation de l'invention dont les éléments profilés ont un profil en gradins ou escalier ;
- la figure 9 est une vue partielle en coupe transversale d'un dispositif selon une forme de réalisation non revendiquée, dont les éléments profilés sont convergents ;
- la figure 10 est une vue en coupe transversale d'un dispositif selon une huitième forme de réalisation de l'invention destiné à former un mur transparent ;
- la figure 11 est une vue en coupe transversale d'un dispositif selon l'invention réalisé sous la forme d'un store placé derrière une surface vitrée ;
- la figure 12 est une vue en coupe montrant de façon détaillée la structure du dispositif de la figure 11 ;
- la figure 13 est une vue en coupe montrant une variante de réalisation du dispositif des figures 11 et 12 ;
- la figure 14 est une vue partielle en coupe d'un dispositif selon l'invention réalisé sous la forme d'un volet placé derrière une surface vitrée; et
- la figure 15 est une vue en coupe partielle d'un dispositif à éléments profilés pivotants selon l'invention.

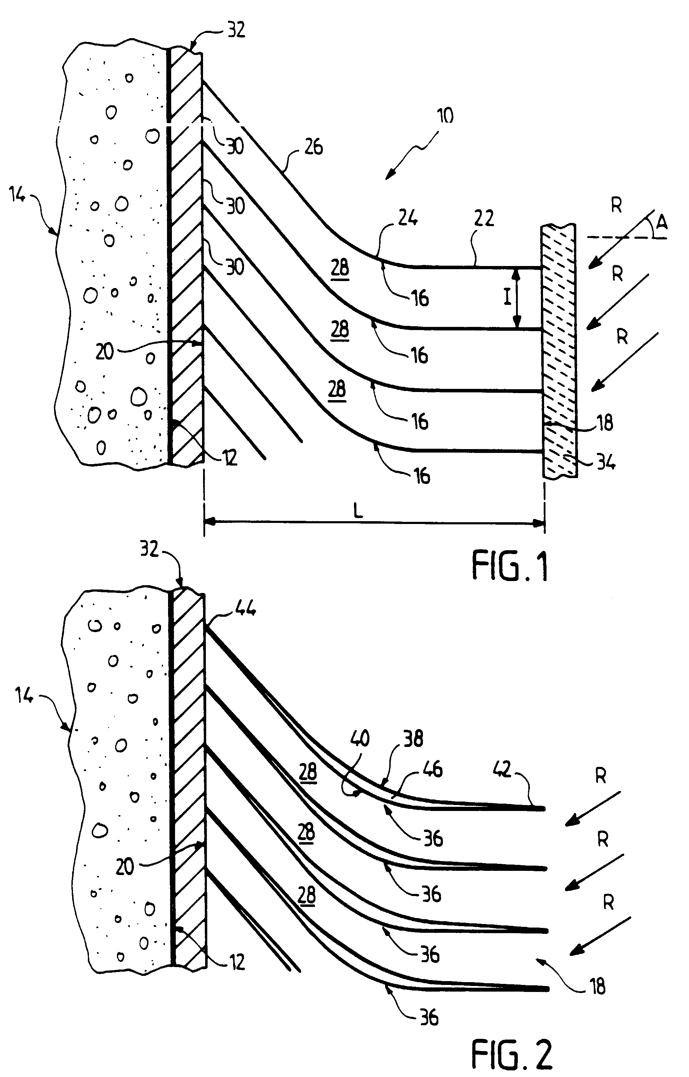

On se réfère tout d'abord à la figure 1 qui représente un dispositif 10 selon l'invention appliqué contre un milieu récepteur qui,dans l'exemple,constitue la surface externe 12 d'un mur 14 vertical ou éventuellement incliné par rapport à la verticale.

Le dispositif 10 comprend une multiplicité d'éléments profilés 16 identiques,sensiblement horizontaux, espacés les uns des autres et superposés dans un plan parallèle à la surface 12, c'est-à-dire dans un plan sensiblement vertical pour former une sorte de rideau. Ce rideau possède une face externe 18 propre à être exposée à un rayonnement solaire R et une face interne opposée 20 propre à être disposée du côté de la surface réceptrice 12.

Chacun des éléments profilés 16 est constitué, dans l'exemple, d'un film mince de profil incurvé formé d'un matériau non- conducteur de la chaleur. Dans l'exemple, il s'agit d'un film en matière plastique, par exemple en polyéthylène ou en polyester ayant une épaisseur de quelques dizaines de micromètres.

Ce film est réalisé transparent ou non-transparent et revêtu sur l'une de ses faces, de préférence sur ses deux faces, d'une couche réfléchissante par exemple d'une couche d'aluminium. La couche réfléchissante appliquée sur l'une ou les deux faces du film peut être avantageusement protégée par un vernis transparent. Si le film est transparent, une seule couche réfléchissante peut être suffisante dans certains cas. Dans l'exemple, la largeur L du rideau, telle que définie entre la face externe 18 et la face interne 20, peut être de l'ordre de 5 à 20 cm et l'intervalle I entre deux éléments 16 successifs de l'ordre du centimètre, par exemple de 2 cm.

Chaque élément profilé 16 possède un profil de forme choisie qui, dans l'exemple, comprend tout d'abord une partie 22 sensiblement horizontale qui s'étend à partir de la face externe 18 et se raccorde, par l'intermédiaire d'une partie incurvée 24, à une partie 26 sensiblement rectiligne qui s'élève progressivement vers la face interne 20.

Chaque élément profilé 16 est mis en forme en incurvant un film du matériau décrit précédemment pour lui conférer la forme du profil représenté.

Les éléments profilés 16 définissent entre eux une multiplicité de canaux d'air 28 formant une succession de matelas d'air superposés, chaque canal étant dirigé de façon ascendante depuis la face externe 18 jusqu'à la face interne 20.

Le dispositif comprend en outre des moyens de fermeture 30 prévus du côté de la face interne 20 du rideau. Ces moyens peuvent prendre différentes formes. Dans l'exemple, ils sont formés par une plaque de fond 32 destiné à supporter une multiplicité d'éléments 16, comme on le verra plus loin.

En variante, la plaque 32 peut être remplacée par un simple voile de matière, ou même supprimée complètement dans la mesure où les éléments profilés 16 parviennent jusqu'à la surface réceptrice 12. La plaque 32 est avantageusement munie d'un revêtement de couleur sombre sur sa face dirigée vers l'extérieur.

La fonction des moyens de fermeture 30 est d'obturer au moins partiellement les canaux 28 du côté de la face externe 20.

Dans l'exemple représenté, la face externe 18 est recouverte d'une plaque transparente 34 en verre ou en matière plastique destinée à laisser passer le rayonnement solaire R.

En variante, il est possible de laisser la face externe 18 complètement ouverte ou encore de la munir d'une grille de protection contre les chocs, puisque cette face est exposée à l'extérieur.

Les éléments profilés 16 ont un profil choisi de telle manière que le rayonnement solaire R pénétrant par la face interne 18 du rideau subisse une succession de réflexions, de la part des faces réfléchissantes des éléments profilés, de manière à pouvoir se propager vers la face interne 20 en suivant le parcours ascendant des canaux 28. Il est toutefois préférable de minimiser le nombre de réflexions pour éviter les pertes dues à chaque réflexion.

La plus grande partie du rayonnement solaire de petite longueur d'onde atteignant la face interne 20 se transforme en rayonnement calorifique de grande longueur d'onde qui ne peut plus s'échapper car la face interne 20 est fermée.

Une faible partie du rayonnement solaire absorbé par les éléments profilés réfléchissants 16 échauffe l'air contenu dans les canaux 28, l'air échauffé s'élevant en direction de la face interne 20 en raison de sa plus faible densité, et l'air froid descendant vers la face interne 18 en raison de sa plus forte densité.

Dans ces conditions, l'air échauffé par le rayonnement solaire est immobilisé du côté de la face interne 20 et assure ainsi le chauffage de la surface réceptrice 12, tout en formant un isolant empêchant un refroidissement rapide de la surface réceptrice 12 lorsque le dispositif 10 ne reçoit plus de rayonnement solaire.

La forme particulière du profil des éléments 16 est choisie en fonction notamment de la latitude géographique du lieu où doit être implanté le dispositif, et cela pour tenir compte de l'angle d'inclinaison A du rayonnement solaire R par rapport à l'horizontale.

En effet,en choisissant de façon appropriée le profil des éléments 16,on peut s'arranger pour que l'effet de chauffage ne soit obtenu que lorsque l'angle A est dans une plage déterminée. Dans ce cas,la plus grande partie du rayonnement solaire atteint la plaque 32 et s'y transforme en chaleur, tandis qu'une faible partie du rayonnement solaire est absorbée par les éléments profilés en échauffant ainsi l'air contenu dans les canaux.

Ainsi, on peut s'arranger pour assurer le chauffage de la surface réceptrice 12 uniquement en période hivernale lorsque l'angle A est en dessous d'un seuil prédéterminé et empêcher ce chauffage en période d'été lorsque l'angle A est au-dessus d'un seuil déterminé.

La forme de réalisation de la figure 2 s'apparente étroitement à celle de la figure 1, si ce n'est qu'elle comporte des éléments 36 dont chacun est constitué de deux films minces 38 et 40 de profil incurvé, formés en un matériau non-conducteur de la chaleur, ces deux films étant réunis entre eux le long de deux bords d'extrémité : un bord 42 du côté de la face externe 18 et un bord 44 du côté de la face interne 20.

On forme ainsi entre les deux films 38 et 40 d'un même élément 36 un espace isolant 46 qui est rempli d'air et qui permet d'améliorer les caractéristiques isolantes du dispositif, par rapport à celui de la figure 1. Sinon, le dispositif de la figure 2 fonctionne de la même façon que celui de la figure 1. Dans le mode de réalisation de la figure 2, la face externe 18 est ouverte et il n'est pas prévu de plaque transparente. Le cas échéant, la face externe 18 peut être protégée par une grille (non représentée). La face interne 20 est fermée par une plaque de fond 32 analogue à celle de la figure 1.

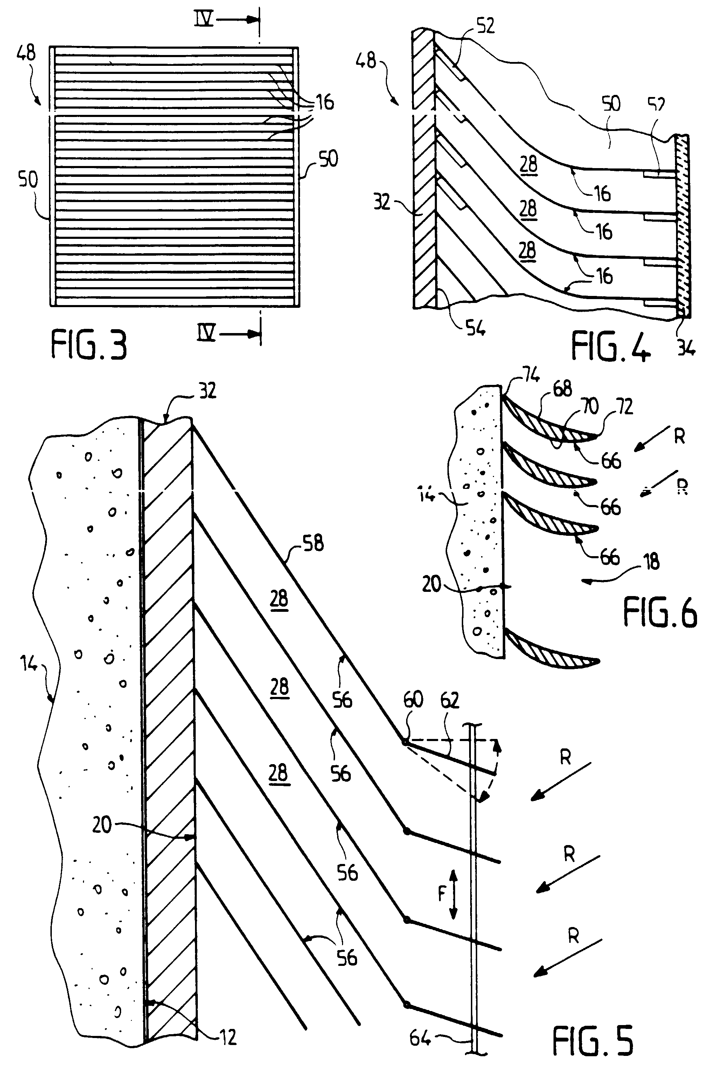

On se réfère maintenant aux figures 3 et 4 qui représentent un panneau 48 de forme générale rectangulaire possédant une plaque de fond 32 analogue à celle des figures 1 et 2. Le panneau peut avoir, à titre d'exemple, une forme carrée de dimensions 60 cm x 60 cm. Dans l'exemple, le panneau 48 comporte deux bordures 50 destinées à être disposées verticalement et entre lesquelles sont tendus les éléments profilés 16 constitués chacun d'un film comme décrit à la figure 1. Chaque élément profilé 16 est amené à la forme voulue et est ensuite fixé entre les deux bordures 50 par des supports adhésifs 52 (figure 4). Dans l'exemple, chacun des éléments 16 est fixé sur chacune des bordures 50 par deux éléments adhésifs 52, l'un situé proche de la plaque 34 et l'autre situé proche de la plaque de fond 32. Bien entendu, il est possible de prévoir d'autres types de moyens de fixation, du moment que chaque élément 16 conserve le profil voulu et soit tendu entre les bordures 50.

La plaque de fond 32 peut, le cas échéant, comporter un revêtement 54 de couleur sombre, par exemple de couleur noire, sur sa face dirigée vers l'extérieur, et cela pour améliorer les propriétés de réception solaire du dispositif.

Le panneau représenté aux figures 3 et 4 pourrait,en variante, être muni des éléments profilés 36 du dispositif de la figure 2.

Dans les formes de réalisation des figures 1 et 2, les éléments profilés 16 ou 36 ont un profil constant choisi de telle façon que le rayonnement solaire parvienne indirectement à la surface réceptrice par réflexion sur leurs faces réfléchissantes.

Dans la forme de réalisation de la figure 5, à laquelle on se réfère maintenant, le dispositif comprend des éléments profilés 56 à profil variable. Chaque élément 56 comprend une partie fixe 58 qui s'étend de manière ascendante à partir d'une région intermédiaire 60 du rideau vers la face interne 20 de ce dernier, ainsi qu'une partie pivotante réglable 62 qui s'étend depuis la face externe 18 du rideau vers la région intermédiaire 60.

Chacune des parties 62 peut pivoter autour d'un pivot d'axe horizontal situé le long de la région intermédiaire 60. Les parties 62 respectives des éléments 56 sont reliées entre elles par un organe de liaison 64 disposé verticalement et pouvant coulisser vers le haut ou vers le bas comme représenté par la flèche F. Les parties respectives 62 des éléments 56 peuvent donc pivoter en synchronisme entre deux positions extrêmes (représentées en trait interrompu) et une multiplicité de positions intermédiaires, dont l'une d'elle est représentée en trait plein.

De cette manière, on peut contrôler le rayonnement solaire qui pénètre dans les canaux 28 jusqu'à la face interne 20 du rideau. Ainsi, l'efficacité du dispositif peut être rendue optimale lorsqu'un chauffage est nécessaire et être arrêtée lorsqu'un tel chauffage est inutile.

Dans l'exemple, les parties respectives 58 et 62 des éléments profilés 56 sont formées à partir d'éléments minces de préférence en matière plastique, ces éléments étant là encore munis d'un revêtement réfléchissant sur leurs deux faces.

Le dispositif de la figure 5 peut être intégré à un panneau du type représenté aux figures 3 et 4. Dans l'exemple, le dispositif de la figure 5 comprend une plaque de fond 32 du côté de sa face interne 20, la face externe 18 étant ouverte.

Dans la forme de réalisation de la figure 6, le dispositif comprend des éléments profilés 66 constitués par des éléments massifs ayant un profil constant s'apparentant à celui d'une aube de turbine. Ces éléments massifs peuvent être réalisés en tout matériau approprié, non-conducteur de la chaleur, par exemple en matière plastique, en béton, en bois, etc.

Les éléments 66 sont prévus normalement pour avoir une dimension supérieure à celle des éléments 16, 36 et 56 décrits précédemment. A titre d'exemple, leur largeur peut être comprise entre 10 et 30 cm et l'intervalle séparant deux éléments être de l'ordre de 5 à 10 cm.

Les éléments massifs de la figure 6 sont destinés essentiellement à être placés à l'extérieur d'un mur 14 d'un bâtiment, mais peuvent être utilisés aussi pour d'autres applications, par exemple pour le chauffage d'un réservoir d'eau, etc.

Chaque élément 66 est délimité par deux surfaces opposées 68 et 70 qui se raccordent entre elles le long d'un premier bord d'extrémité 72 situé du côté de la face externe 18 et le long d'un second bord d'extrémité 74 qui se raccorde le long de la face interne 20.

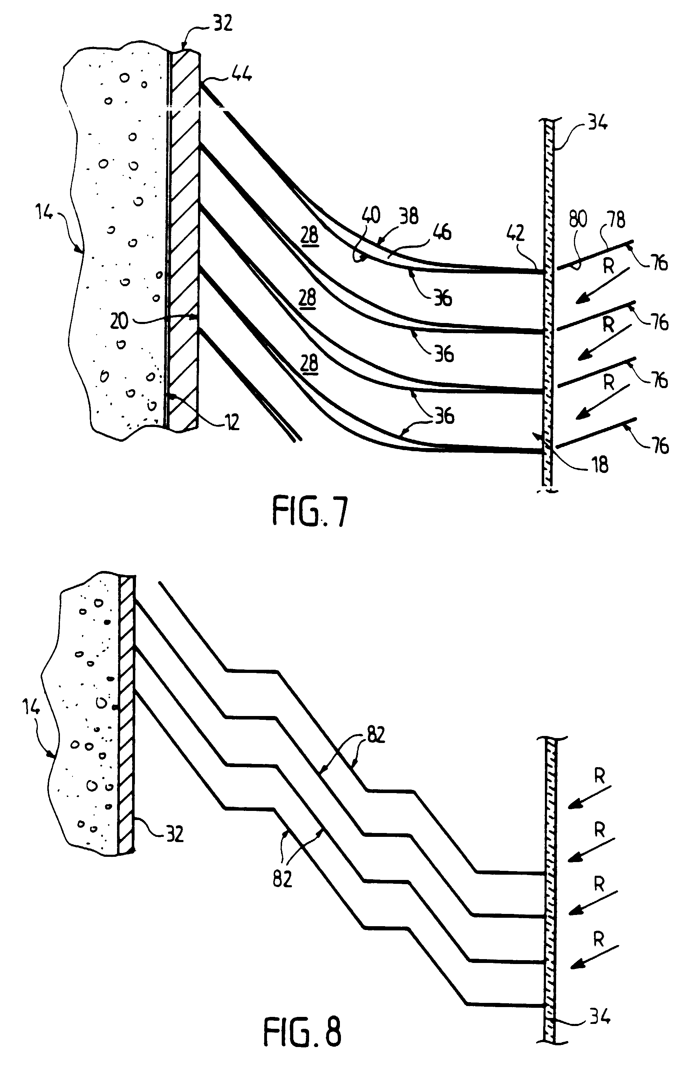

Dans la forme de réalisation de la figure 7 à laquelle on se réfère maintenant, le dispositif s'apparente à celui de la figure 2, le rideau comprenant en outre une plaque transparente 34 analogue à celle du dispositif de la figure 1.

Par ailleurs, le dispositif de la figure 7 comprend une multiplicité d'organes auxiliaires 76 prolongeant respectivement les éléments profilés 36 du côté de la face externe 18 du rideau. Chaque organe auxiliaire 76 possède une surface supérieure 78 de couleur foncée et une surface inférieure réfléchissante 80.

Les organes auxiliaires 78 peuvent être montés fixes ou réglables. En principe, ces organes auxiliaires sont faiblement inclinés par rapport à l'horizontale.

En hiver, le rayonnement solaire est faiblement incliné par rapport à l'horizontale et vient se réfléchir contre les surfaces inférieures réfléchissantes 80 pour pénétrer ensuite dans les canaux 28 et assurer ainsi le chauffage du mur 14.

En été, le rayonnement solaire est fortement incliné par rapport à l'horizontale et vient frapper les surfaces 78 de couleur foncée, ce qui assure le chauffage de ces dernières. La chaleur ainsi produite est ensuite dégagée vers l'extérieur par convection, sans aller à l'intérieur du dispositif. Bien entendu, les organes auxiliaires 78 pourraient être utilisés avec des éléments profilés ayant des profils différents.

Dans les formes de réalisation décrites précédemment, les éléments profilés ont des profils incurvés de telle sorte que la face intérieure 20 du rideau ne "voit" pas sa face extérieure 18, ce qui permet de former un bouchon radiatif.

Dans la forme de réalisation de la figure 8, à laquelle on se réfère maintenant, le dispositif comprend des éléments profilés 82 en forme de gradins ou escalier qui, dans l'exemple, sont disposés entre une plaque 32 appliquée contre un mur 14 ou autre milieu récepteur et une plaque transparente 34.

Du fait de la configuration particulière des éléments 82, la face interne 20 du rideau ne "voit" pas sa face extérieure 18 et on obtient plusieurs bouchons radiatifs au lieu d'un seul dans le cas des formes de réalisation précédentes.

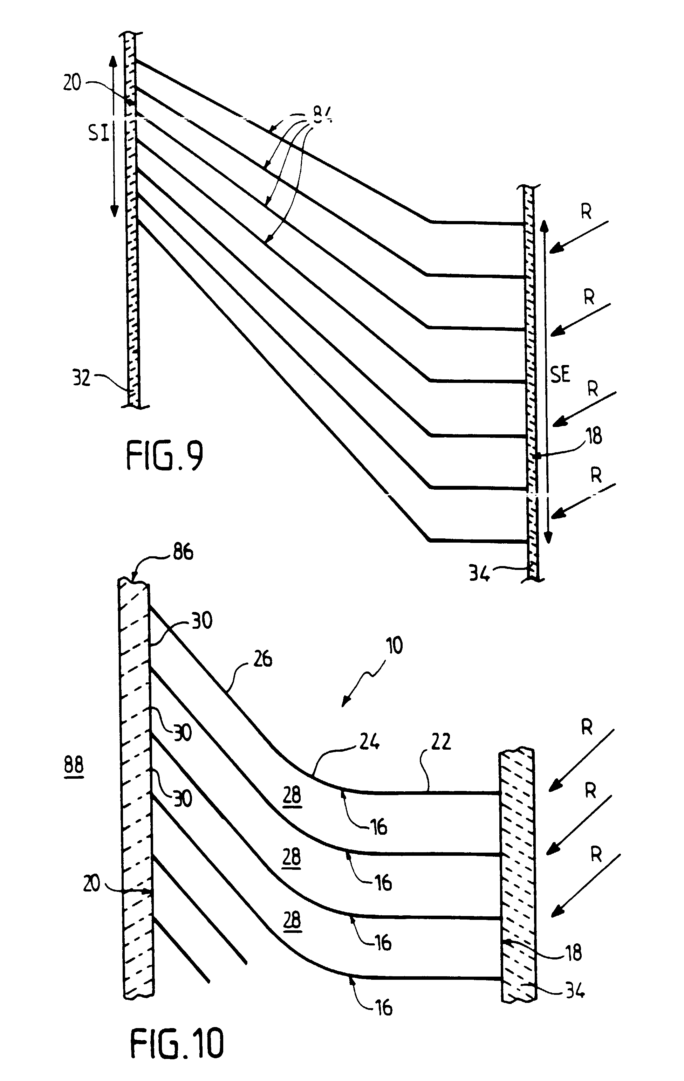

Dans la forme de réalisation de la figure 9, laquelle n'est pas revendiquée, le dispositif comprend une multiplicité d'éléments profilés 84 s'étendant entre une face extérieure 18 fermée par une plaque transparente 34 et une face intérieure 20 fermée par une plaque 32, transparente ou non.

Dans l'exemple, les éléments profilés 84 vont en convergeant depuis la face extérieure 18 jusqu'à la face intérieure 20. On obtient ainsi une multiplicité de canaux d'air convergents. Il en résulte que la surface extérieure SE qui reçoit le rayonnement solaire est supérieure à la surface intérieure SI située du côté du milieu récepteur. On obtient ainsi un effet d'amplification et de concentration de la chaleur solaire.

Dans la forme de réalisation de la figure 10, à laquelle on se réfère maintenant, le dispositif est réalisé sous la forme d'un mur transparent. Il comprend, dans l'exemple, une multiplicité d'éléments profilés 16 analogues à ceux de la figure 1, disposés entre une plaque extérieure transparente 34 exposée à un rayonnement solaire R et une plaque intérieure 86 qui est également transparente. La plaque 86 est destinée à être disposée du côté d'un milieu récepteur 88 qui constitue ici le volume intérieur d'un bâtiment. De cette façon, on réalise un mur isolant qui conserve l'énergie lumineuse et qui peut être utilisée par exemple pour réaliser des serres, des salles de sports, des vérandas, etc.

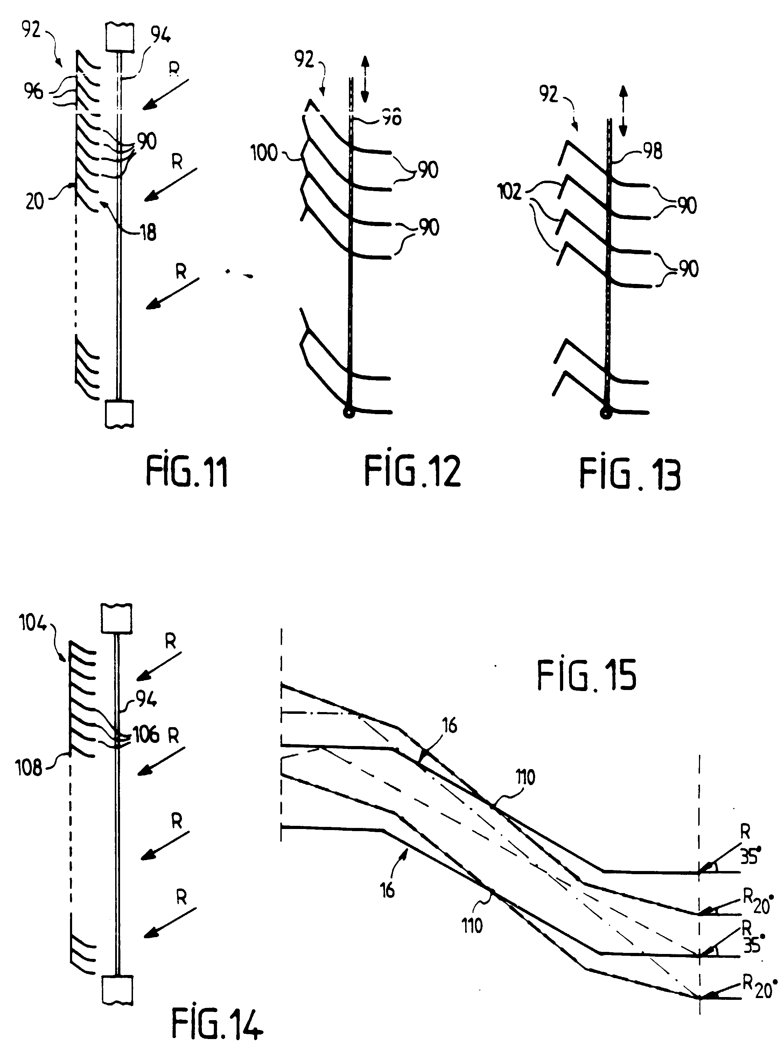

Dans la forme de réalisation de la figure 11, à laquelle on se réfère maintenant, le dispositif est réalisé sous la forme d'un store qui s'apparente à un store à lames ou store vénitien.

Le dispositif comprend ici une multiplicité d'éléments profilés 90, constitués chacun d'une lame ou lamelle avantageusement réalisée en une matière plastique de faible épaisseur. Là encore, cette matière plastique est munie d'une couche réfléchissante sur chacune de ses faces. Le profil de chaque élément 90 s'apparente à celui des éléments profilés 16 représentés aux figures 1 et 4. L'ensemble des éléments 90 constitue un store 92 qui dans l'exemple est placé à l'intérieur d'un bâtiment derrière une surface vitrée 94. Le store 92 comporte une face externe 18 qui est ouverte et une face interne 20 qui est fermée par des éléments de fermeture 96 reliant deux à deux les éléments 90 du côté de la face interne 20.

Le store 92 permet de capter l'énergie solaire provenant du rayonnement solaire R et traversant la surface vitrée 94.

Le dispositif fonctionne de la même façon que les dispositifs précédents et permet d'immobiliser de l'air chaud dans les canaux délimités entre les éléments 90.

Comme montré à la figure 12, les éléments 90 peuvent être rapprochés ou écartés les uns des autres par l'intermédiaire d'un cordon de tirage ou analogue 98 comme dans le cas d'un store à lames connu.

Dans la forme de réalisation de la figure 12, les éléments de fermeture situés du côté de la face interne 20 du store sont formés par un soufflet 100 présentant une succession de plis, qui sont en position dépliée sur la figure 12. Lorsque les éléments profilés 90 se rapprochent les uns des autres sous l'action des moyens de tirage 98, les plis se rapprochent les uns des autres.

Dans la forme de réalisation de la figure 13, les éléments de fermeture sont constitués par des éléments individuels 102 prolongeant respectivement les éléments profilés 76 du côté de la face interne du store. Dans l'exemple, les éléments 102 forment un angle aigu avec l'élément 90 dont ils dépendent. Ces moyens de fermeture obturent seulement partiellement les canaux correspondants. Bien entendu, le store 92 des figures 11 à 13 pourrait aussi être placé à l'extérieur d'un bâtiment.

Dans la forme de réalisation de la figure 14, à laquelle on se réfère maintenant, le dispositif est réalisé sous la forme d'un volet 104, qui, dans l'exemple, est placé à l'intérieur d'un bâtiment, derrière une surface vitrée 94 analogue à celle de la figure 11.

Le dispositif 104 comprend une multiplicité d'éléments profilés 106 qui sont reliés rigidement entre eux par une plaque de fond 108 qui peut être transparente ou non.

Dans le cas du store des figures 11 à 13 ou du volet de la figure 14, les éléments de fermeture sont avantageusement transparents. Ainsi, ce store ou ce volet laisse pénétrer l'énergie solaire et assure le chauffage tout en conservant ses propriétés isolantes.

Dans la forme de réalisation de la figure 15, le dispositif comprend une multiplicité d'éléments profilés 16 montés à pivotement autour d'axes respectifs parallèles 110. Ces éléments profilés peuvent prendre différentes positions d'orientation en fonction, par exemple, de l'angle d'inclinaison du rayonnement solaire R par rapport à l'horizontale.

Sur la figure 15 on a représenté en traits pleins deux éléments profilés dans une première position correspondant à un angle d'inclinaison de 35° du rayonnement solaire R. Ces deux éléments profilés sont également représentés en traits interrompus dans une seconde position correspondant à un angle d'inclinaison de 20° du rayonnement solaire R.

On peut ainsi optimiser le fonctionnement du dispositif en tenant compte de l'évolution du rayonnement solaire au cours de la journée.

En variante, on peut prévoir de faire pivoter un panneau identique ou analogue à celui de la figure 3, sur lequel les éléments profilés sont montés fixes.

On comprendra que le dispositif de l'invention trouve une application générale pour capter l'énergie solaire et la transférer vers un milieu récepteur qui peut être notamment un mur d'un bâtiment, une paroi d'une citerne, etc.

Le dispositif de l'invention permet de capter l'énergie solaire et de la transférer sur un milieu récepteur, d'une manière contrôlée, tout en formant un bon isolant avec un coefficient de pertes thermiques réduit, les éléments profilés assurant un triple blocage : radiatif, convectif et conductif.

Il est à noter que le dispositif fonctionne de façon efficace même en cas d'un très faible ensoleillement ou en cas de nébulosité.

## Revendications

1. Dispositif pour capter l'énergie solaire et la transférer sur un milieu récepteur à chauffer, comprenant une multiplicité d'éléments profilés (16;36;56;66;76;90;106) sensiblement horizontaux, espacés les uns des autres et superposés pour former un rideau (10;78) ayant une face externe (18) propre à être exposée à un rayonnement solaire et une face interne (20) propre à être disposée du côté du milieu récepteur (12), dans lequel les éléments profilés sont non-conducteurs de la chaleur de la face externe (18) à la face interne (20), ont deux faces réfléchissantes et un profil de forme choisie de manière à définir entre eux une multiplicité de canaux d'air (28) dirigés ascendants de la face externe (18) à la face interne (20), des moyens de fermeture (30;32;96;100;102;108) étant prévus du côté de la face interne et/ou de la face externe du rideau pour immobiliser l'air contenu dans les canaux, et dans lequel les éléments profilés sont espacés deux à deux d'un intervalle (I) ayant sensiblement la même valeur du côté de la face externe et du côté de la face interne du rideau et ont un profil choisi de telle façon que le rayonnement solaire (R) parvienne indirectement au milieu récepteur (12) par réflexions successives sur leurs faces réfléchissantes, et cela de manière que le milieu récepteur ne voit pas la face externe (18) du rideau pour former un bouchon radiatif.

2. Dispositif selon la revendication 1, caractérisé en ce que chaque élément profilé (16) est constitué d'un film mince de profil incurvé, formé d'un matériau non-conducteur de la chaleur.

3. Dispositif selon la revendication 1, caractérisé en ce que chaque élément profilé (36) est constitué de deux films minces (38,40) de profil incurvé, formés en un matériau non-conducteur de la chaleur et réunis entre eux le long de deux bords d'extrémité (42,44) pour définir entre eux un espace isolant (46) rempli d'air.

4. Dispositif selon la des revendication 1, caractérisé en ce que chaque élément profilé (66) est un élément massif ayant un profil en forme d'aube de turbine.

5. Dispositif selon l'une des revendications 1 à 4, caractérisé en ce qu'il comprend des éléments profilés (16 ; 36 ; 66) à profil incurvés ou des éléments profilés (82) à profil en gradins ou escalier.

6. Dispositif selon la revendication 1, caractérisé en ce que chaque élément profilé (56) a un profil variable et comprend une partie fixe (58) qui s'étend de manière ascendante à partir d'une région intermédiaire du rideau vers la face interne (20) de ce dernier et une partie pivotante réglable (62) qui s'étend depuis la face externe du rideau vers la région intermédiaire, laquelle constitue un pivot entre la partie fixe (58) et la partie pivotante (60).

7. Dispositif selon l'une des revendications 1 à 5, caractérisé en ce qu'il comprend en outre une multiplicité d'organes auxiliaires (76) prolongeant respectivement les éléments profilés (16 ; 36) du côté de la face externe (18) du rideau, chaque organe auxiliaire possédant une surface supérieure (78) de couleur foncée et une surface inférieure (80) réfléchissante.

8. Dispositif selon l'une des revendications 1 à 5, caractérisé en ce que les éléments profilés (84) sont agencés de manière à converger de la face externe (18) à la face interne (20), la surface (SE) de la face externe étant supérieure à la surface (SI) de la face interne.

9. Dispositif selon l'une des revendications 1 à 5, caractérisé en ce qu'il comprend un panneau (48) de forme générale rectangulaire supportant une multiplicité d'éléments profilés (16 ; 36 ; 56).

10. Dispositif selon l'une des revendications 1 à 8, caractérisé en ce que la face externe (18) du rideau est munie d'une plaque transparente (34).

11. Dispositif selon la revendication 10, caractérisé en ce que la face interne (20) du rideau est munie d'une plaque transparente (86) de manière à former un mur transparent.

12. Dispositif selon la revendication 10, caractérisé en ce que la face interne (20) du rideau est munie d'une plaque (32) portant un revêtement de couleur sombre.

13. Dispositif selon l'une des revendications 1 à 5, caractérisé en ce au'il est agencé sous la forme d'un store (92) dans lequel les éléments profilés (90) peuvent être rapprochés les uns des autres ou écartés.

14. Dispositif selon l'une des revendications 1 à 5, caractérisé en ce qu'il est agencé sous la forme d'un volet (104) dans lequel les éléments profilés (106) sont maintenus fixes entre eux par une plaque (108).

15. Dispositif selon l'une des revendications 1 à 5, caractérisé en ce que les éléments profilés (16) sont montés à pivotement en synchronisme autour d'axes respectifs parallèles (110).

## Patentansprüche

1. Vorrichtung zum Auffangen von Sonnenenergie und zur Übertragung auf einen zu heizenden Empfänger, aufweisend mehrere im wesentlichen horizontale, voneinander beabstandete und übereinander angeordnete Profilelemente (16;36;56;66;76;90;106) zur Bildung eines Vorhangs (10;78) mit einer Außenseite (18), die geeignet ist, einer Sonnenstrahlung ausgesetzt zu werden, und einer Innenseite (20), die geeignet ist, auf der Seite des Empfängers (12) angeordnet zu werden, wobei die Profilelemente die Wärme von der Außenseite (18) nicht zur Innenseite (20) leiten, zwei reflektierende Seiten und ein Profil einer Form aufweisen, die derart gewählt ist, daß zwischen ihnen mehrere Luftkanäle (28) festgelegt sind, die ausgehend von der Außenseite (18) zur Innenseite (20) abfallend ausgerichtet sind, Verschlußelemente (30;32;96;100;102;108), die auf der Seite der Innenseite und/oder der Außenseite des Vorhangs vorgesehen sind, um die in den Kanälen enthaltene Luft unbeweglich zu machen, und wobei die Profilelemente paarweise mit einem Zwischenraum (I) beabstandet sind, der im wesentlichen dieselbe Größe auf der Seite der Außenseite und der Seite der Innenseite des Vorhangs aufweist, und ein Profil haben, das derart gewählt ist, daß die Sonnenstrahlung (R) indirekt vom Empfänger (12) durch aufeinanderfolgende Reflexionen auf ihren reflektierenden Seiten herrühren, und dies derart, daß der Empfänger die Außenseite (18) des Vorhangs nicht sieht, um einen Strahlungsabschluß zu bilden.

2. Vorrichtung nach Anspruch 1, dadurch gekennzeichnet, daß jedes Profilelement (16) aus einer dünnen Schicht mit einwärts gekrümmtem Profil besteht, die aus einem die Wärme nicht leitenden Material gebildet ist.

3. Vorrichtung nach Anspruch 1, dadurch gekennzeichnet, daß jedes Profilelement (36) aus zwei dünnen Schichten (38,40) mit einwärts gekrümmtem Profil besteht, die aus einem die Wärme nicht leitenden Material gebildet und untereinander entlang zwei Außenrändern (42,44) vereinigt sind, um dazwischen einen mit Luft gefüllten isolierenden Raum (46) festzulegen.

4. Vorrichtung nach Anspruch 1, dadurch gekennzeichnet, daß jedes Profilelement (66) ein massives Element mit einem Profil in Turbinenschaufelform ist.

5. Vorrichtung nach einem der Ansprüche 1 bis 4, dadurch gekennzeichnet, daß sie Profilelemente (16;36;66) mit einwärts gekrümmtem Profil oder Profilelemente (82) mit Stufen- oder Leiterprofil aufweist.

6. Vorrichtung nach Anspruch 1, dadurch gekennzeichnet, daß das Profilelement (56) ein variables Profil ist und einen feststehenden Teil (58) aufweist, der sich in abfallender Weise ausgehend von einem Zwischenbereich des Vorhangs zu der Innenseite (20) desselben erstreckt, und einen regelbaren schwenkbaren Teil (62), der sich ab der Außenseite des Vorhangs zum Zwischenbereich erstreckt, der zwischen dem festen Teil (58) und dem schwenkbaren Teil (60) eine Schwenkachse bildet.

7. Vorrichtung nach einem der Ansprüche 1 bis 5, dadurch gekennzeichnet, daß sie außerdem mehrere Hilfsorgane (76) aufweist, die sich jeweils ausgehend von den Profilelementen (16;36) von der Außenseite (18) des Vorhangs aus erstrecken, wobei jedes Zusatzorgan eine Oberseite (78) dunkler Farbe und eine reflektierende Unterseite (80) aufweist.

8. Vorrichtung nach einem der Ansprüche 1 bis 5, dadurch gekennzeichnet, daß die Profilelemente (84) derart ausgelegt sind, daß sie von der Außenseite (18) zur Innenseite (20) konvergieren bzw. zusammenlaufen, wobei die Oberfläche (SE) der Außenseite über der Oberfläche (SI) der Innenseite liegt.

9. Vorrichtung nach einem der Ansprüche 1 bis 5, dadurch gekennzeichnet, daß sie eine allgemein rechteckige Platte (48) aufweist, die mehrere Profilelemente (16;36;56) trägt.

10. Vorrichtung nach einem der Ansprüche 1 bis 8, dadurch gekennzeichnet, daß die Außenseite (18) des Vorhangs mit einer transparenten Platte (34) versehen ist.

11. Vorrichtung nach Anspruch 10, dadurch gekennzeichnet, daß die Innenseite (20) des Vorhangs mit einer transparenten Platte (86) derart gebildet ist, daß eine transparente Mauer gebildet ist.

12. Vorrichtung nach Anspruch 10, dadurch gekennzeichnet, daß die Innenseite (20) des Vorhangs mit einer Platte (32) versehen ist, die einen Überzug bzw. eine Beschichtung dunkler Farbe trägt.

13. Vorrichtung nach einem der Ansprüche 1 bis 5, dadurch gekennzeichnet, daß sie in Form eines Fenstervorhangs (92) gebildet ist, bei welchem die Profilelemente (90) nahe zueinander oder entfernt voneinander liegen können.

14. Vorrichtung nach einem der Ansprüche 1 bis 5, dadurch gekennzeichnet, daß sie in Form eines Fensterladens (104) gebildet ist, bei welchem die Profilelemente (106) untereinander durch eine Platte (108) unbeweglich gehalten sind.

15. Vorrichtung nach einem der Ansprüche 1 bis 5, dadurch gekennzeichnet, daß die Profilelemente (16) um jeweilige parallele Achsen (110) synchron schwenkbar angebracht sind.

## Claims

1. Arrangement for collecting solar energy and transferring it to a receiving medium to be heated comprising a multiplicity of substantially horizontal profiled elements (16; 36; 56; 66; 76; 90; 106) spaced one from another and superposed to form a curtain (10; 78) having an external face (18) designed to be exposed to solar radiation and an internal face (20) designed to be disposed adjacent to the receiving medium (12), in which the profiled elements are non-conductors of heat from the external face (18) to the internal face (20), have two reflecting faces and a profile of selected shape such as to define between them a multiplicity of air channels (28) directed upwards from the external face (18) to the internal face (20), closure means (30; 32; 96; 100; 102; 108) being provided adjacent to the internal face and/or the external face of the curtain to immobilise the air contained in the channels, and in which the profiled elements are spaced in pairs at an interval (I) having substantially the same value adjacent to the external face and adjacent to the internal face of the curtain and have a profile chosen in such a way that the solar radiation (R) reaches the receiving medium (12) indirectly by successive reflections on their reflecting faces and in such a manner that the receiving medium cannot see the external face (18) of the curtain so as to form a radiative trap.

2. Arrangement according to claim 1, characterised in that each profiled element (16) is constituted by a thin film of concave profile formed of non-heat-conducting material.

3. Arrangement according to claim 1, characterised in that each profiled element (36) is constituted by two thin films (38, 40) of concave profile formed of a non-heat-conducting material and joined together along two edges (42, 44) to define between them an insulating space (46) filled with air.

4. Arrangement according to claim 1, characterised in that each profiled element (66) is a solid element having a profile in the form of a turbine blade.

5. Arrangement according to one of claims 1 to 4, characterised in that it comprises profiled elements (16; 36; 66) of concave profile or profiled elements (82) having a stepped or staircase profile.

6. Arrangement according to claim 1, characterised in that each profiled element (56) has a variable profile and comprises a fixed part (58) which extends in a rising manner starting from an intermediate region of the curtain towards the internal face (20) of the latter and an adjustable pivoting part (62) which extends from the external face of the curtain towards the intermediate region, which constitutes a pivot between the fixed part (58) and the pivoting part (60).

7. Arrangement according to one of claims 1 to 5, characterised in that it further comprises a multiplicity of auxiliary members (76) forming respective extensions of the profiled elements (16; 36) adjacent to the external face (18) of the curtain, each auxiliary member possessing an upper surface (78) of dark colour and a reflecting lower surface (80).

8. Arrangement according to one of claims 1 to 5, characterised in that the profiled elements (84) are arranged in a manner to converge from the external face (18) to the internal face (20), the surface (SE) of the external face being greater than the surface (SI) of the internal face.

9. Arrangement according to one of claims 1 to 5, characterised in that it has a frame (48) of generally rectangular shape supporting a multiplicity of profiled elements (16; 36; 56).

10. Arrangement according to one of claims 1 to 8, characterised in that the external face (18) of the curtain is provided with a transparent sheet (34).

11. Arrangement according to claim 10, characterised in that the internal face (20) of the curtain is provided with a transparent sheet (86) such as to form a transparent wall.

12. Arrangement according to claim 10, characterised in that the internal face (20) of the curtain is provided with a sheet (32) having a coating of dark colour.

13. Arrangement according to one of claims 1 to 5, characterised in that it is constructed in the form of a blind (92) in which the profiled elements (90) can be caused to approach one another or spread apart.

14. Arrangement according to one of claims 1 to 5, characterised in that it is constructed in the form of a shutter (104) in which the profiled elements (106) are held fixed in relation to one another by a sheet (108).

15. Arrangement according to one of claims 1 to 5, characterised in that the profiled elements (16) are mounted to pivot in synchronism about respective parallel axes (110).
